# EUROPÄISCHE PATENTSCHRIFT

(11) **EP 0 455 016 B1**
(45) Veröffentlichungstag und Bekanntmachung des Hinweises auf die Patenterteilung: **15.11.1995**
(21) Anmeldenummer: 91105757.8
(22) Anmeldetag: 11.04.1991
(51) Int. Cl.: B60R 19/20, B60R 21/24, B66B 5/28, F16F 9/04

(54) **Prallkörper**
Buffer
Amortisseur de chocs

(30) Priorität: 30.04.1990 DE 4013868
(43) Veröffentlichungstag der Anmeldung: 06.11.1991
(73) Patentinhaber: DIEHL GMBH & CO., 90478 Nürnberg (DE)
(72) Erfinder: Rumer, Klaus, Dr., W-8562 Hersbruck (DE)

(56) Entgegenhaltungen:
- DE-A- 2 152 635
- DE-A- 3 829 368
- DE-A- 3 833 888
- DE-A- 3 913 034
- FR-A- 2 123 700
- FR-A- 2 420 456
- US-A- 3 884 497

## Beschreibung

Die Erfindung betrifft einen Prallkörper gemäß dem Oberbegriff des Anspruches 1.

Ein als wabenartiger Unterfahrschutz vor der Vorderachse eines Lastkraftfahrzeuges zu montierender Prallkörper ist aus der ADAC motorweit, Heft 7/1989, Seite 8, bekannt. Die Weichblech-Wabenkonstruktion weist hinter einer Kunststoffabdeckung voraus orientierte stabförmige Polyeder auf, die durch ihre Verformung schockabsorbierend für eine Auftreffmasse wirken sollen. Bei derartigen Prallkörper-Konstruktionen ist jedoch der hohe Fertigungsaufwand und der vergleichsweise außerordentlich große Einbauraumbedarf von Nachteil, aber auch die stirnseitige Gefährdung der Auftreffmasse nach dem Zersplittern der Kunststoffabdeckung vor den schneidenförmigen Stirnkanten der Polyeder-Waben.

Bei Personenkraftwagen höherer Komfortklassen sind formstabile Stoßstangen vor Dämpfungselementen in Einsatz, welche durch ihre innere Verformungsarbeit (in gummiähnlichen Klötzen) oder durch Verdrängungsarbeit (bei Kolben-Fluidsystemen) die Aufprallenergie einer Auftreffmasse abfangen und abbauen sollen. Ähnlich wirken Pralltopfsysteme (etwa Feder-Gummi-Kombinationen) als Auffahrsicherungen in Fahrstuhlschächten oder Seilbahnanlagen.

Grundsätzlich andere Funktionskriterien sind mit Airbag-Sicherheitseinrichtungen für Fahrzeugpassagiere zu erfüllen. Hier soll der Kopf und gegebenenfalls auch Oberkörper bei einer unfallbedingten Verzögerung dadurch vor dem Aufschlag gegen ein vor der Person befindliches Konstruktionsteil geschützt werden, daß ein Crash-Sensor einen Gasgenerator zum Aufblasen eines Gaskissens initiiert, welches die dann auftreffende Person infolge Gasablasses (durch die poröse Hülienstruktur oder durch Auslaßvantile) weich einsinken läßt und unmittelbar danach in sich zusammenfällt, um beispielsweise den Fahrzeuglenker dann nicht mehr zu behindern. Dabei kann (DE-OS 36 29 368) im Innern eines Gaskissens ein weiteres, sehr viel kleineres Gaskissen angeordnet sein, das nach dem Zusammenfall des großen äußeren Kissens aufgebläht bleibt, um im Falle eines Folgestosses wieder ein Abfangen des Körpers zu gewährleisten, ohne zwischendurch eine unzuträgliche Behinderung darzustellen.

Aus der DE-OS 38 29 617 ist es bekannt, ein großes Gaskissen dadurch mit beschränktem Gasvolumen auszustellen, daß nicht der gesamte Kissen-Innenraum aufgeblasen wird, sondern nur der schmale Raum einer doppelwandigen Kissenhülle.

Gemäß dem Oberbegriff des Anspruchs 1 ist es aus der DE-A-2 152 635 bekannt, zum Schutz der Insassen von Kraftfahrzeugen mehrere ineinander angeordnete Gaskissen vorzusehen. Diese Gaskissen sind durch die Auslösung einer mit einem Auslösesensor versehenen gasentwickelnden Vorrichtung nacheinander durch das Platzen eines Primärbehälters aufblasbar. Es liegt also nur eine einzige Gasquelle vor, die zunächst den Primärbehälter füllt.

Ganz anders als im Falle solchen passiven Fahrzeüginsassenschutzes liegen die Anforderungen an einen stoßabbauenden Prallkörper gattungsgemäßer Art, weil es hier gerade nicht um das kurzzeitige welche Abfangen und unmittelbar daraufhin wieder erfolgende Freigeben einer pendelnden Körperbewegung geht, sondern um die Aufnahme und abbremsende Umsetzung von Bewegungsenergie einer, ohne zu hohe Schockbeanspruchung stillzusetzenden, Auftreffmasse hoher kinetischer Energie. In Erkenntnis dieser Gegebenheiten liegt der Erfindung die Aufgabe zugrunde, einen Prallkörper gattungsgemäßer Art zu schaffen, der trotz geringen Einbauvolumens einen harten Laststoß in konstruktiv beeinflußbarer Kinetik aufnehmen und bis zur relativen Ruhelage der Auftreffmasse gegenüber dem Prallkörper-Träger abbauen kann.

Diese Aufgabe ist erfindungsgemäß im wesentlichen dadurch gelöst, daß der gattungsgemäße Prallkörper gemäß dem kennzeichnenden Teil des Hauptanspruches ausgelegt ist.

Diese Lösung beruht auf der Überlegung, daß es - anders als bei Insassen-Schutzsystemen - für Prallkörper zum Abbremsen von Auftreffmassen am wichtigsten ist, deren kinetische Energie ohne große Rückfedereffekte zu übernehmen, was am einfachsten dadurch zu realisieren ist, daß eine vergleichsweise harte Lastaufnahme am Gaskissen bis zur Drucksteigerung über seine Berstgrenze hinaus zugelassen wird; mit wenigstens einem nachfolgenden Gaskissen, das für Aufnahme der Restenergie der abzufangenden Masse unter harter Federcharakteristik ausgelegt ist. Für große Massen, die aus hoher Geschwindigkeit heraus über extrem kurze Strecken zum Stilstand gebracht werden müssen, wie im Falle von Sicherheitseinrichtungen für Fahrstühle oder Seilbahnanlagen, ist zwischen dem äußersten berstenden und dem innersten nicht berstenden Gaskissen wenigstens ein weiteres angeordnet, das im Falle nicht-berstender Auslegung eine innere Abstützung durch das dahinter gelegene Gaskissen erfährt. Die einzelnen Gaskissen werden zweckmäßigerweise von außen nach innen zeitlich gestaffelt aus einem zentral für alle vorgesehenen Zündgerät in oder hinter dem Montage-Träger für den Aufbau der noch eingefalteten Kissenhüllen in definierter zeitlicher Staffelung initiiert, wobei die Ansteuerung des Zündgerätes durch einen auf das Beanspruchungs-Szenario abgestimmten Auslösesensor erfolgt. Letzterer kann ein auf extreme positive oder negative Verzögerungen ansprechender Sensor sein, der am Prallkörper-Aufbauträger und/oder an der relativ hierzu abzufangenden Masse angeordnet ist. Bei Bahnanlagen (seien sie nun schienengebunden, schrägseilgebunden oder als Vertikalaufzüge ausgelegt) ist der Auslösesensor im Bahnführungsbereich hinter der letzten Station angeordnet, so daß er nur bei irregulärem Überfahren der letzten Station anspricht. Dieser oder ein zusätzlicher Auslösesensor kann aber auch in der Kabinen-Antriebseinrichtung installiert sein und beispielsweise über einen Fahrstrom- oder Geschwindigkeits-Detektor auf einen irregulären Betriebszustand ansprechen, der sonst zum harten Aufprall auf die Bahnbegrenzung führen würde.

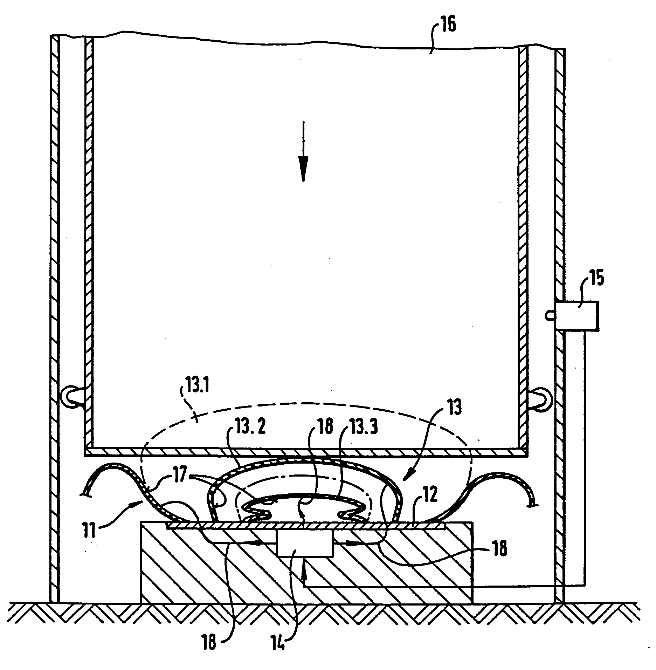

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche stark vereinfacht und nicht maßstabsgerecht skizzierten bevorzugten Realisierungsbeispiels zur erfindungsgemäßen Lösung. Die einzige Figur der Zeichnung zeigt zur Veranschaulichung der Wirkungsweise des erfindungsgemäßen Prallkörpers dessen Realisierung als Stoßfänger am Grunde eines Fahrstuhlschachtes.

Der im Schnitt dargestellte Prallkörper 11 weist mehrere, hier drei, ineinander auf einem gemeinsamen Montage-Träger 12 angeordnete Gaskissen 13 mit einem diesen gemeinsamen Zündgerät 14 auf, das durch einen Auslösesensor 15 initiierbar ist, um das Aufblasen der Gaskissen 13 derart zeitlich gestaffelt einzuleiten, daß das äußere Gaskissen 13.1 vor dem oder den mittleren 13.2 und das innerste Gaskissen 13.3 nach letzteren prallgefüllt ist. Dadurch ist an sich vor dem Träger 12 eine exzentrische Anordnung mehrerer ineinander gelegener gefüllter Gaskissen 13 erzielbar, wie in der Zeichnung gestrichelt und strichpunktiert veranschaulicht. Jedoch ist die mechanische und kinematische Auslegung der ineinander gestaffelten Gaskissen 13 derart gewählt, daß bei Funktionsbereitschaft des Prallkörpers 11 zum Abbau der Schockbelastung einer Auftreffmasse 16 (in der Zeichnung skizziert als betriebswidrig durchsackender und dadurch im Führungsgestänge den Sensor 15 aktivierender Fahrstuhlkorb) das äußere Gaskissen 13.1 einen gedämpften Überdruck-Abbau erfährt (durch die Porösität seines Gewebes und/oder durch ein Ablaßventil, nicht gezeichnet; sowie durch die nur vergleichsweise langsam ansteigende Reaktionskraft des dahinter zeitverzögert sich aufblähenden mittleren Gaskissens 13.2). Durch die Belastung mit der Auftreffmasse 16 wird schließlich der konstruktiv (über Bruchnähte oder Überdruckventile) vorgegebenen Berstdruck unmittelbar nach voller Ausbildung des mittleren Gaskissens 13.2 überschritten. Wie dargestellt übernimmt dann dieses kleinere mittlere Gaskissen 13.2 den weiteren Energieabbau an der bereits vorgebremsten Masse 16. Auch das letzte von mehreren mittleren Gaskissen 13.2 kann durchaus bis zum Bersten belastet werden. Denn das innerste Gaskissen 13.3 ist hinsichtlich seiner Stabilität und seiner Aufblas-Kinematik in bezug auf zu erwartende Schock-Beanspruchungen des Prallkörpers 11 am stabilsten und mit geringster Nachgiebigkeit (Elastizität) ausgebildet, so daß - unabhängig vom Bestand oder vom Bersten des letzten mittleren Gaskissens 13.2 - die Auftreffmasse 16 schließlich auf dem nun noch leicht einfedernden letzten Gaskissen 13.3 zur Ruhe kommt.

Für das Aufblasen der Gaskissen 13 werden zweckmäßigerweise keine herkömmlichen zentralen oder gruppierten Gaskartuschen eingesetzt, sondern für jedes der Gaskissen 13 eine initiierte Gaserzeugungseinrichtung 17 in Form von gasbildendem Granulat; oder wie sie als solche aus der DE-OS 39 13 034 bekannt ist, also als eine Beschichtung der Innenseiten der einzelnen Gaskissen-Hüllen mit reaktionsaktivem Material, dessen Umsetzung mit eingemischten Reaktionspartnern extrem rasch äußerst energiereiche Reaktionsgase zum nahezu inkompressiblen raschen Aufblasen der einzelnen Gaskissen 13 freisetzt. Dabei ist es von Vorteil, daß desto mehr Reaktionsbeschichtung untergebracht werden kann, je größer das ausgestellte Gaskissen 13 dimensioniert ist, je größer also seine Hüllen-Innenfläche ist; mit fortschreitender Reaktion von der Anzündstelle über die Innenfläche im Zuge des Anwachsens an Füllgasbedarf beim Aufstellen der zunächst auf engsten Bereitstellungsraum eingefalteten Gaskissen-Hülle. Dabei kann das Reaktionsmaterial auf die Gaskissen-Ausstellkinetik optimiert werden, da eine Verträglichkeit des aus dem Kissen 13 dann freigesetzten Gases mit Personen, anders als bei Personenwagen-Rückhaltesystemen, aufgrund des Einsatzes erfindungsgemäßer Prallkörper 11 kein zwingendes Auslegungskriterium ist. Deshalb kann sich als gasbildende Substanz im Innern der noch eingefalteten Kissenhüllen bzw. auf deren Innenmantelflächen insbesondere auch das in der US-PS 4 744 300 zu einem ganz anderen Zweck (Beschleunigung einer Masse der verdämmenden Wirkung einer inkompressiblen Umgebungsflüssigkeit gegenüber) beschriebene hochagile Natriumborhydrid, bei elektrochemischer Freisetzung eines beigemengten sauren Reaktionspartners, eignen.

Damit ist ein hochwirksamer aber nur flach bauender Prallkörper geschaffen, von dem keine Verletzungsgefahren für die abzubremsende Masse ausgehen und der nach einem Ansprechen leicht austauschbar ist gegen ein funktionstüchtiges neues Exemplar.

## Patentansprüche

1. Prallkörper (11), mit mehreren ineinander angeordneten Gaskissen (13), die durch die Auslösung einer mit einem Auslösesensor (15) versehenen gasentwickelnden Vorrichtung (17) nacheinander aufblasbar sind,
dadurch gekennzeichnet,
daß die Gaskissen (13.1 bis 13.3) von einem gemeinsamen, dem Auslösesensor (15) nachgeschalteten Verzögerungs-Zündgerät (14) auslösbar sind und jedes Gaskissen (13.1 bis 13.3) eine auslösbare Gaserzeugungseinrichtung (17) aufweist.

2. Prallkörper nach Anspruch 1,
dadurch gekennzeichnet,
daß die Gaskissen (13) in flacher Einfaltung auf einem gemeinsamen Montageträger (12) exzentrisch ineinander angeordnet sind.

3. Prallkörper nach einem der vorangehenden Ansprüche,
dadurch gekennzeichnet
daß ein äußeres Gaskissen (13.1) früher zum Aufblasen initiiert wird, als ein darin angeordnetes inneres Gaskissen (13.2, 13.3).

4. Prallkörper nach Anspruch 1,
dadurch gekennzeichnet,
daß die Gaserzeugungseinrichtung (17) elektrisch initiierbar ist, indem sie in Form einer reaktionsgasliefernden Substanz innerhalb der Gaskissen-Hülle, vorzugsweise aufgebracht als Beschichtung auf der Hüllen-Innenmantelfläche, vorliegt.

5. Prallkörper nach einem der vorangehenden Ansprüche,
dadurch gekennzeichnet,
daß wenigstens das äußerste Gaskissen (13) auf Bersten bei Erreichen eines vorgegebenen Druckanstiegs ausgelegt ist.

6. Prallkörper nach einem der vorangehenden Ansprüche,
dadurch gekennzeichnet,
daß wenigstens das innerste Gaskissen (13.3) darauf ausgelegt ist, allenfalls bei äußerer Belastung seine Gasfüllung langsam auszugeben, aber im Rahmen vorgegebener Beanspruchungsgrenzen nicht zu bersten.

## Claims

1. Impact bodies (11), having several gas cushions (13) disposed one inside the other, which can be successively inflated by the triggering of a gas-generating device (17) provided with a trigger sensor (15),
characterized in that
the gas cushions (13.1 to 13.3) can be triggered by a common delay ignition device (14) connected to the trigger sensor (15) and each gas cushion (13.1 to 13.3) has a gas-generating device (17) capable of being triggered.

2. Impact bodies according to Claim 1,
characterized in that
the gas cushions (13) are disposed eccentrically one inside the other in flat folds on a common mounting support (12).

3. Impact bodies according to one of the preceding claims,
characterized in that
an external gas cushion (13.1) starts inflating before an inner gas cushion (13.2, 13.3) disposed therein.

4. Impact bodies according to Claim 1,
characterized in that
the gas-generating device (17) can be electrically initiated in that it is in the form of a reactive gas-supplying substance inside the gas cushion cover, preferably applied as a coating on the cover's inside surface.

5. Impact bodies according to one of the preceding claims,
characterized in that
at least the outermost gas cushion (13) is designed to burst on reaching a predetermined rise in pressure.

6. Impact bodies according to one of the preceding claims,
characterized in that
at least the innermost gas cushion (13.3) is designed, should the need arise due to external loading, to slowly let out its gas load, but not to burst within the framework of predetermined stress limits.

## Revendications

1. Corps d' impact (11) avec une pluralité de coussins de gaz (13) disposés les uns dans les autres, pouvant être gonflés les uns après les autres par le déclenchement d'un dispositif producteur de gaz (17), pourvu d'un capteur de déclenchement (15),
caractérisé en ce que
les coussins de gaz (13.1 à 13.3) peuvent être déclenchés par un allumeur à retardement (14) commun, mis en circuit en aval du capteur de déclenchement (15), et chaque coussin de gaz (13.1 à 13.3) présentant un dispositif générateur de gaz (17) pouvant être déclenché.

2. Corps d'impact selon la revendication 1,
caractérisé en ce que
les coussins de gaz (13) sont disposés les uns dans les autres de façon excentrés, pliés de façon plate, sur un support de montage (12) commun.

3. Corps d'impact selon l'une des revendications précédentes,
caractérisé en ce que
le gonflage d'un coussin de gaz (13.1) extérieur est initié plus tôt que celui d'un coussin de gaz (13.2, 13.3) intérieur disposé en lui.

4. Corps d'impact selon la revendication 1,
caractérisé en ce que
le dispositif de production de gaz (17) peut être allumé électriquement, du fait qu'il se présente sous la forme d'une substance réactive produisant du gaz, disposé à l'intérieur de l'enveloppe de coussin de gaz, de préférence appliqué en revêtement sur la surface intérieure d'enveloppe de la douille.

5. Corps d'impact selon l'une des revendications précédentes,
caractérisé en ce que
au moins le coussin de gaz (13) le plus à l'extérieur est conçu pour éclater à l'atteinte d'une augmentation de pression prédéterminée.

6. Corps d'impact selon l'une des revendications précédentes,
caractérisé en ce que
au moins le coussin de gaz (13.3) le plus extérieur y est réalisé de sorte à libérer son gaz lentement en tout cas lorsqu'il est sollicité extérieurement mais n'éclate pas dans le cadre de limites de sollicitation prédéterminées.
